# EUROPEAN PATENT SPECIFICATION

(11) **EP 1 765 017 B1**
(45) Date of publication and mention of the grant of the patent: **11.03.2015**
(21) Application number: 06100484.2
(22) Date of filing: 17.01.2006
(51) Int. Cl.: G06F 17/30, H04N 21/433, H04N 21/432, H04N 21/854, G06F 12/08

(54) **Data processing methods and systems**
System und Verfahren zum Datenverarbeiten
Appareil et système de traitement de données

(30) Priority: 20.09.2005 US 230402
(43) Date of publication of application: 21.03.2007
(73) Proprietor: MediaTek Inc., Hsin-Chu 308 (TW)
(72) Inventor: Su, Chan-Hung, 813, Tzuoying District, Kaohsiung City (TW); Hsieh, Yu-Cheng, 814, Kaohsiung County (TW)
(74) Representative: 2K Patentanwälte Blasberg Kewitz & Reichel

(56) References cited:
- WO-A2-03/034746
- US-A- 5 604 499
- US-A- 6 008 745
- US-A- 6 157 929
- US-A1- 2004 205 224
- SINGER D ET AL: 'ISO Media File format specification' ISO/IEC JTC1/SC29/WG11 MPEG01/N4270-1 23 July 2001, pages 1 - 49, XP002245422
- NATHAN T. SLINGERLAND ET AL: "Cache performance for multimedia applications", PROCEEDINGS OF THE 15TH INTERNATIONAL CONFERENCE ON SUPERCOMPUTING , ICS '01, 1 January 2001 (2001-01-01), pages 204-217, XP055096588, New York, New York, USA DOI: 10.1145/377792.377833

## Description

### BACKGROUND

The present disclosure relates generally to data processing, and more particularly to methods and systems for processing and accessing metadata in a media file.

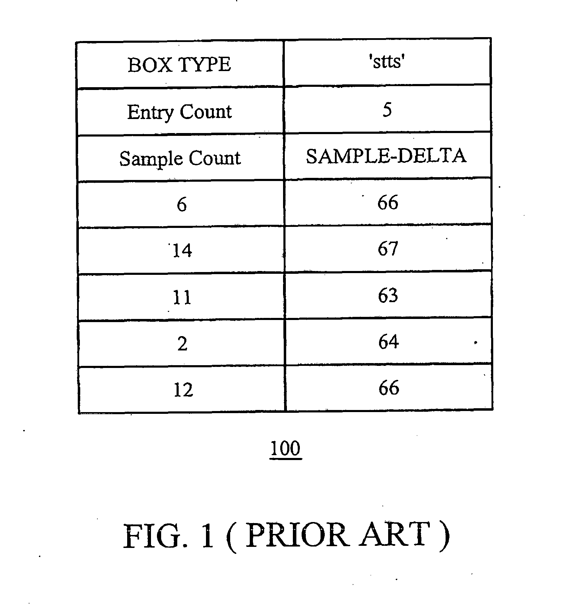

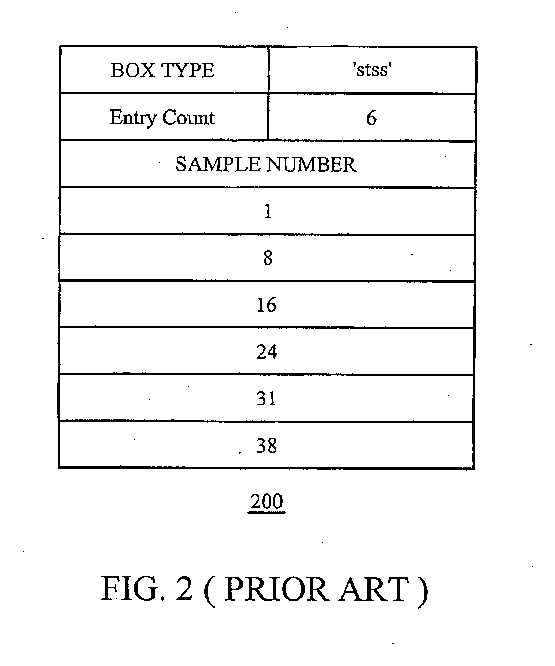

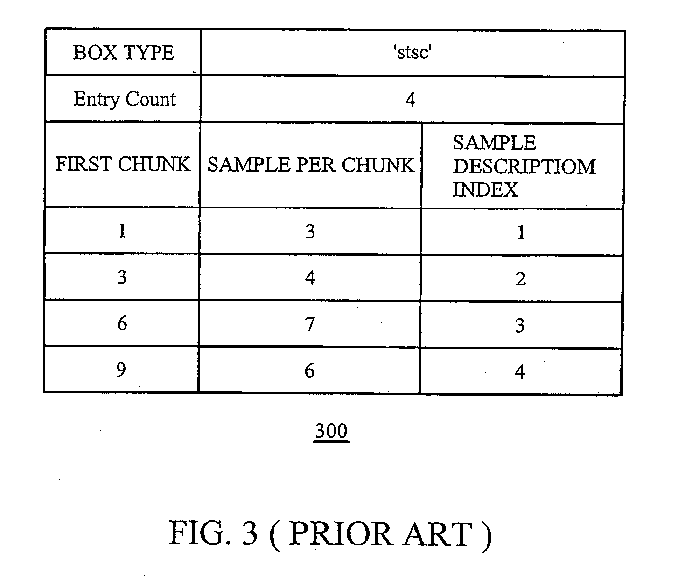

Media files, such as MPEG-4 files, comprise media data and metadata of the media data. The metadata provides data sample information to media applications for processing media data in the media file. Generally, media files are defined to be organized with several structural elements. For example, MPEG-4 files are composed of structural elements call boxes. Each box may comprise media data, metadata or other sub-boxes. For example, a sample table box (STBL) records time and file information of media data. According to the time and file information in the STBL box, applications can obtain the time, type, data size, and position in the media file and further perform the play-back or random-seek functions toward the media file, accordingly. The STBL box also includes several sub-boxes comprising a decoding time to sample box (STTS) as shown in Fig. 1, a sample size box (STSZ), a sample to chunk box (STSC) as shown in Fig. 3, a chunk offset box (STCO), a sync sample box (STSS) as shown in Fig. 2, sample description table (STSD), and others.

The STTS box contains at least one entry for recording the time duration of samples of media data. Fig. 1 shows a STTS box 100, comprising 5 entries with total 45 samples in the media data. It should be noted that data in the STTS box is recorded using the concept of run-duration coding to reduce the size thereof. That is, the time duration for media sample #1~#6, #7~#20, #21~#31, #32~#33, and #34~#45 is 66, 67, 63, 64, and 66 time units, respectively, and the total time duration of the 45 sample of the media data is 2947 time units.

Traditionally, a linear search through these boxes is performed to help locating a specific sample with a target decoding time. A linear search means that the time duration of respective samples from the very first media sample is accumulated until the accumulated time duration equals or exceeds the target decoding time. For example, to locate a specific sample with a specific decoding time of time unit 2000, a linear search is performed by accumulating the time duration of the first thirty samples. Since the total time duration of the first thirty samples is 1964 (6*66+14*67+10*63=1964) and the total time duration of the first thirty-one samples is 2027 (6*66+14*67+11*63=2027) which exceeds the specific decoding time 2000, sample #30 is then located. The linear search calculation is time-consuming if there is large number of entries in these boxes.

In addition, the media samples in the media data are grouped into chunks. The STSC box records the mapping relationship between sample and chunk. Based on the mapping relationship recorded in the STSC box, one can identify in which chunk a target sample resides, and further obtain other related data using the chunk information. Fig. 3 shows a STSC 300, in which the number of samples in chunk #1~#2, chunk #3~#5, chunk #6~#8, and chunk #9 is 3, 4, 7, and 6, respectively. Similarly, data in the STSC is recorded using the concept of run-duration coding to reduce the size thereof. To locate a specific sample, a specific chunk corresponding to the specific sample is sought by performing a linear search by accumulating the number of samples from the first chunk. The calculation is time-consuming if the number of entries in the STSC box is large.

US 6 157 929 discloses A system, apparatus and method for managing the storage and use of digital information. The digital information can comprise both time-based information, such as digital video and digital audio, and static information such as 3D geometric models and/or still images. The invention employs data source records, information consumers, digital source information files, quality factor objects and other constructs with an information manager to manage storage and use of the information. All storage and/or use of the information is effected by making an appropriate request to the information manager which returns an appropriate result.

WO 03034746 discloses that a variable length decoding of DCT coefficients in MPEG video data is performed using a standard processor (400) and a small look-up table (LUT 530). The processor performs (520) an integer to floating point conversion on a portion the received bitstream (BS). By this step, lengthy codewords with many leading zeros, which are common in the codebook, are represented in a compressed form by the exponent and mantissa fields (EXP, MAN) of the floating point result (FP). The relevant bits are extracted and used as an index (IX) to address the LUT. This avoids cumbersome bit-oriented logic, while also avoiding a very large LUT that would otherwise be required to represent the same codebook. The entire LUT may thus reside in cache memory (410). In a VLIW processor implementation, decoding of one token is pipelined with the inverse scan and inverse quantisation step of the preceding token (s) .

US 5 604 499A discloses a prefix data generating portion being arranged such that a bit string having bits in predetermined number supplied from a barrel shifter is compared, from the head part thereof, with predetermined patterns and that there is supplied a less-bit bank address assigned to the identical predetermined pattern. In a look-up table, a decoded data is addressed using (i) an upper address of the bank address and (ii) a lower address of a plurality of remaining bits of the code, other than the predetermined pattern. Accordingly, the look-up table can be addressed with an address in which the number of bits is smaller than that of the code. This reduces the look-up table in capacity, enabling to provide a variable-length decoding apparatus reduced in hardware size.

In US 6008 745 one embodiment of the present invention provides a method and an apparatus for decoding a variable length code using lookup tables. This embodiment improves lookup performing by allowing multiple symbols to be retrieved in a single lookup, and allowing lookups into different tables to proceed in parallel. Another embodiment of the present invention provides for multiple secondary lookup tables to be selected based upon a prefix value decoded by a primary lookup table. Thus, one embodiment of the present invention can be characterized as an apparatus for decoding a variable length code. This apparatus includes an input from an encoded bitstream, the input including a first set of bits and a second set of bits. This apparatus also includes a first table indexed by the first set of bits, which includes entries containing decoded symbols corresponding to variable length codewords in the first set of bits. At least one entry contains multiple symbols for the case where the first set of bits contains multiple codewords. Another embodiment includes a second table indexed by the second set of bits. This second table incudes entries containing decoded symbols corresponding to variable length codewords spanning the first set of bits and the second set of bits. In yet another embodiment, the first table and the second table are configured to allow a lookup from the first table to proceed in parallel with a lookup from the second table. In another embodiment, the first table and the second table are configured so that a lookup in the first table precedes a lookup in the second table.
US 2004/0205224 A1 discloses a concept to provide meta data also called hint which allow an efficient packaging of video and audio data into packages for a network transfer.

### SUMMERY

Data processing methods and systems are provided.

In an embodiment of a data processing method for accessing a target sample in a media data stream, target sample information corresponding to the target sample is provided. The media data stream has a plurality of samples and corresponding sample information recorded in at least one entry, wherein the sample information for a predetermined number of the entries is calculated and the calculated result is stored in at least one cache entry. One of the cache entries is located by comparing the target sample information with the calculated result of respective cache entries. After locating the cache entries, the target sample from the entries is located according to the located cache entry.

An embodiment of a data processing system comprises a media data stream, at least one cache entry, and a processing unit. The media data stream comprises a plurality of samples and corresponding sample information recorded in at least one entry. The sample information for a predetermined number of the entries is calculated and the calculated result is stored in the cache entry. The processing unit receives target sample information corresponding to a target sample, locates one of the cache entries by comparing the target sample information with the calculated result of respective cache entries, and after locating the cache entries, locates the target sample from the entries according to the located cache entry.

Data processing methods may take the form of program code embodied in a tangible media. When the program code is loaded into and executed by a machine, the machine becomes an apparatus for practicing the disclosed method.

### DESCRIPTION OF THE DRAWINGS

The invention will become more fully understood by referring to the following detailed description with reference to the accompanying drawings, wherein:
Fig. 1 shows an example of a STTS box;
Fig. 2 shows an example of a STSS box;
Fig. 3 shows an example of a STSC box;
Fig. 4 is a schematic diagram illustrating an embodiment of entries in the STTS box and its corresponding pre-calculated cache entries;
Figs 5A~5D shows an example of incremental processing;
Fig. 6 is a flowchart showing an embodiment of a data processing method; and

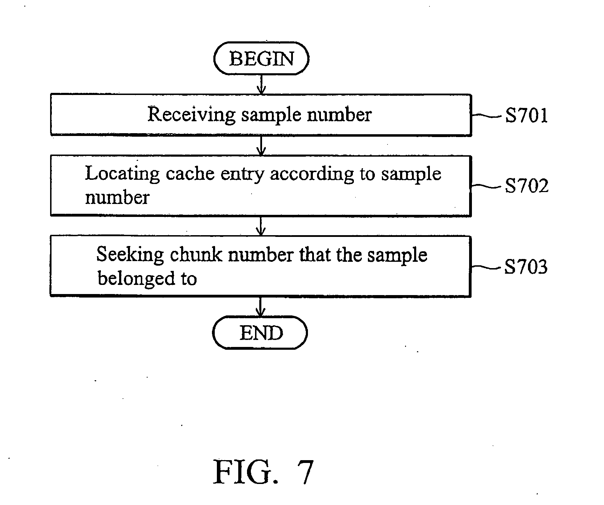

Fig. 7 is a flowchart showing another embodiment of a data processing method.

### DESCRIPTION

Data processing methods and systems are provided, in which pre-calculated cache entry, shared cache pool and incremental processing are employed. In the following embodiments, the data processing methods and systems are used to decode MPEG-4 files, which is well-defined in ISO standard and is however not limited in the present invention. An overview of the MPEG-4 files is provided in a standard specification of ISO 14496-12.

### Pre-calculated cache entry:

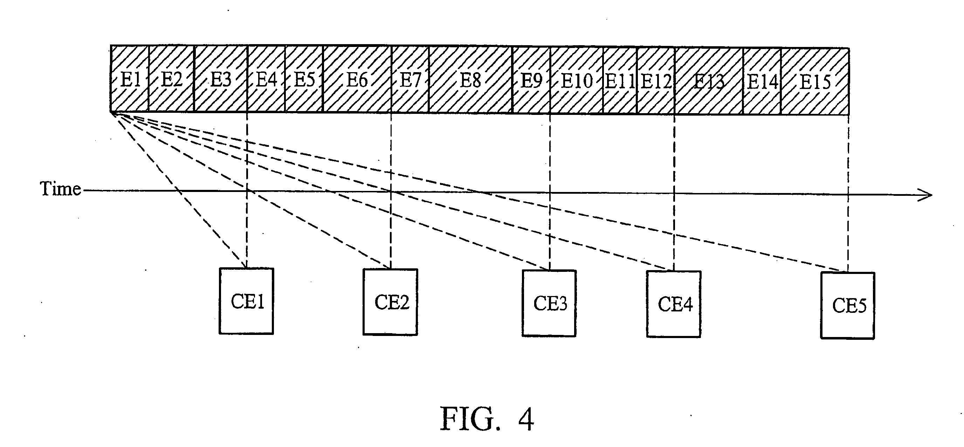

Fig. 4 is a schematic diagram illustrating an embodiment of entries in the STTS box and its corresponding pre-calculated cache entries. Each cache entry records the accumulated total time duration of a group of STTS entries. In this embodiment, each group contains 3 STTS entries. As shown in Fig. 4, the total time duration of the STTS entries E1, E2 and E3 are recorded by cache entry CE1, the total time duration of the STTS entries E4, E5 and E6 are recorded by cache entry CE2, the total time duration of the STTS entries E7, E8 and E9 are recorded by cache entry CE3, the total time duration of the STTS entries E10, E11 and E12 are recorded by cache entry CE4, and the total time duration of the STTS entries E13, E14 and E15 are recorded by cache entry CE5. For example, if STTS entry E1 records 3 samples and the time duration of each is 5, STTS entry E2 records 5 samples and the time duration of each is 10, and STTS entry E3 records 7 samples and the time duration of each is 8, the cache entry CE1 records the total time duration of 15 samples as 121. The calculation for other cache entries is similar thereto. It should be noted that the time duration recorded in the cache entries could be calculated in advance.

To locate a specific decoding time, the total time duration of samples recorded from the very first cache entry is accumulated until the accumulated total time duration equals or exceeds the specific target decoding time, such that a cache entry is located. After a cache entry is located, the STTS entries corresponding to the located cache entry are further checked using a linear search as the conventional method, in which the time duration of samples from the first media sample of the located cache entry is accumulated until the sum of the accumulated time duration of samples in the located cache entry and the accumulated total time duration of cache entries prior to the located cache entry equals or exceeds the target decoding time.

It is understood that the total time duration recorded in the located cache entry is less than or equal to the specific decoding time. For example, if the decoding time is between the accumulated total time duration at cache entries CE1 and CE2, the cache entry CE1 is first located. Then, a specific media sample corresponding to the specific decoding time is found according to the accumulated total time duration of cache entries CE1, and the accumulated time duration of respective samples in STTS entries E7, E8 and E9. Accordingly, by separately recording the time duration of a group of box entries in at least one cache entry, it can reduce the frequencies of accessing media files since the pre-calculated data stored in the cache entry can be directly accessed. It is understood that the use of pre-calculated cache entry can be also applied to STSS and STSC. In STSC, the cache entry records the total number of samples in the chunks covered by the current and prior cache entries.

### Shared cache pool:

In some embodiments, the number of corresponding cache entries to each box might be either fixed or dynamically decided according to each box size.

In some embodiments, the total size of cache memory might be limited and the allocation of the cache entries for each box can be determined using a shared cache pool model. In the shared cache pool, the number of cache entries for a box is determined according to the number of entries in the boxes requiring cache entries in the order of initialization. For example, to allocate a certain amount of cache entries to the STTS box, the STSS box and the STSC box, the system will firstly allocate a first ratio of the cache entries to the STSS box. The first ratio could be the number of STSS entries divided by the total cache entry amount. In some embodiments, the number of cache entries allocated to the STSS box can be further limited to a pre-defined maximum number. Then, the system will allocate a second ratio of the cache entries to the STSC box. The second ratio could be the number of STSC entries divided by the total cache entry amount. In some embodiments, the number of cache entries allocated to the STSC box can also be further limited to a pre-defined maximum number. Finally, the system will allocate the rest of the cache entries to the STTS box. It should be noted that the order of cache allocation is not limited in the present 9 invention. Any order of cache allocation should be covered in the present invention.

### Incremental processing:

As mentioned above, with the pre-calculated cache entries, lots of time spent on redundant computation can be reduced. However, if the boxes (STTS, STSS and STSC) are very large, the calculation of cache entries will need a certain amount of time. For example, if complete cache entries for the STTS box must be prepared before a playback, the accumulated total time duration of a group of STTS entries for respective cache entries must be calculated. To reduce the response time caused by calculation of cache entries before playback, the calculation of cache entries is performed with the concept of incremental processing. In incremental processing, a part of the cache entries is calculated before the playback of media data, and the rest of the cache entries are calculated progressively during playback. If the data sought by users is not found in the currently ready cache entries, the calculation of cache entries is performed forward until the data is covered by the cache entries.

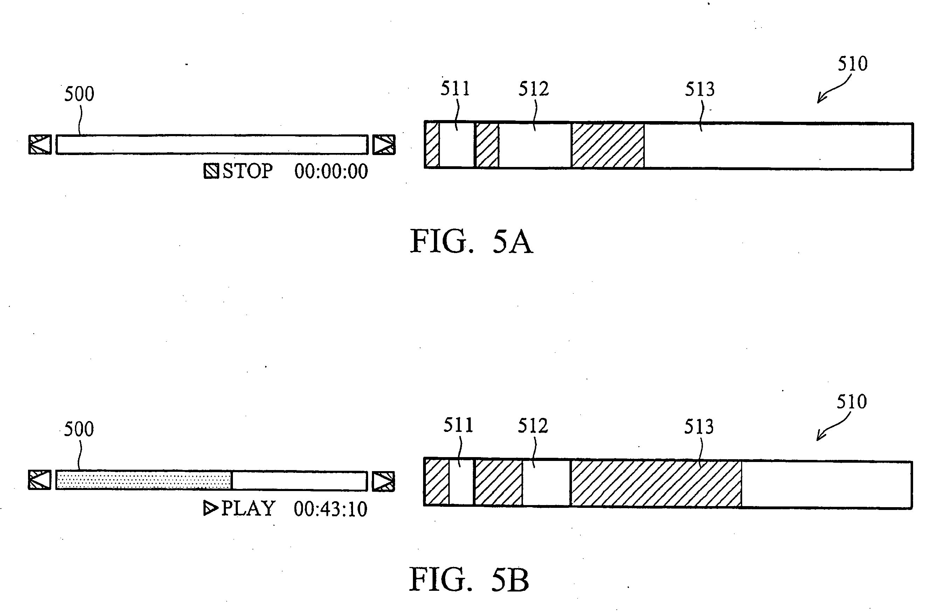

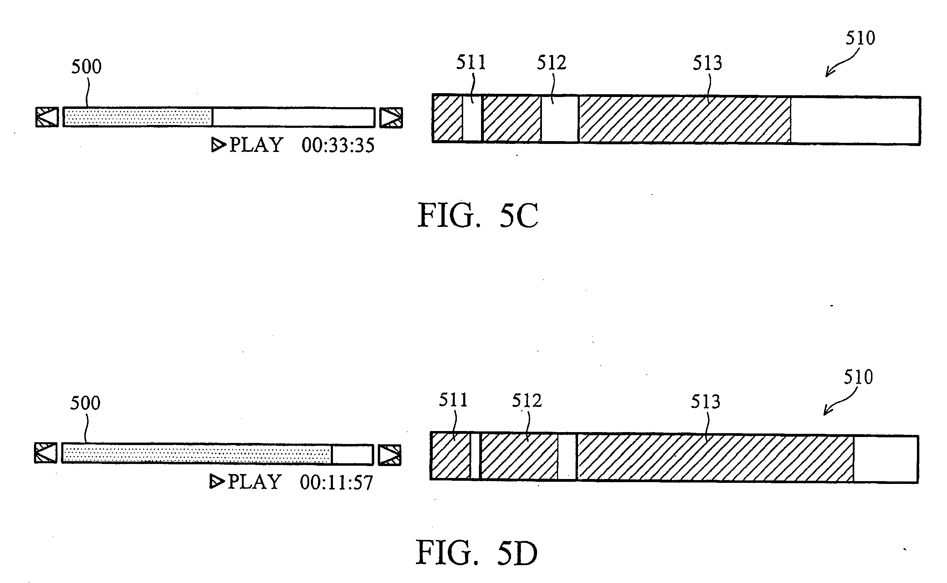

Figs 5A-5D shows an example of incremental processing. In this example, the memory space 511 of the memory 510 is allocated to the STSS box for its corresponding cache entries, the memory space 512 of the memory 510 is allocated to the STSC box for its corresponding cache entries, and the memory space 513 of the memory 510 is allocated to the STTS box for its corresponding cache entries. As shown in Fig. 5A, before the playback of media data (see playback status 500), only a part of the cache entries for respective boxes is calculated. The rest of the cache entries for respective boxes are calculated progressively during playback, as shown in Fig. 5B. Since the calculation is accomplished progressively during playback, each time only a small part of the cache entries is calculated (as shown in Fig. 5C), no time delay in playback will be aware by users. If a target decoding time prior to current decoding time is sought, since the required data can be found in the calculated cache entries, no time delay will be aware by users. If a target decoding time is sought and the required data is not found in the calculated cache entries, the calculation of cache entries is performed forward until the data is covered by the cache entries, as shown .in Fig. 5D.

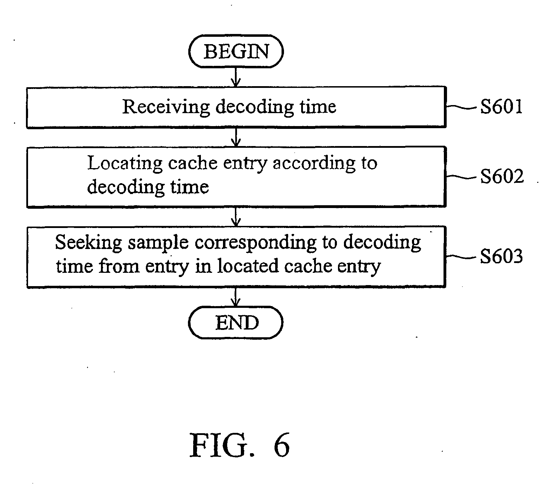

Fig. 6 is a flowchart showing an embodiment of a data processing method. In this embodiment, a STTS box is used as an example, rather a limitation to the invention. To locate a decoding time received in step S601, in step S602, one of the cache entries is firstly located, in which the total time duration of samples recorded from the very first cache entry is accumulated until the accumulated total time duration accumulated to the located cache entry equals or exceeds the decoding time. In step S603, after the cache entry is located, a sample corresponding to the decoding time can be easily found by a linear search. Here, after locating the cache entry, the method of the present invention only needs to search through the group corresponding to the cache entry for the target sample by accumulating the time durations of respective samples in the STTS entries until the sum of the accumulated time duration of samples in the located cache entry and the accumulated total time duration of cache entries prior to the located cache entry equals or exceeds the target decoding time. Therefore, total search time can be reduced. It is understood that if the sample is sought for playback, it is also determined whether the sample can be randomly accessed. As described, there are random accessible samples and non-random accessible samples among the media data. A random accessible sample means the sample can be sought and decoded without regard to other samples. If the desired sample, is not a random accessible one, a random access point (random accessible sample) closest to (equal to or less than) the sample is sought from the STSS, and a decoding time of the random access point is then sought from the STTS box.

Fig. 6 is a flowchart showing an embodiment of a data processing method. In this embodiment, a STTS box is used as an example, rather than a limitation to the invention. To locate a decoding time received in step S601, in step S602, one of the cache entries is firstly located, in which the total time duration of samples recorded from the very first cache entry is accumulated until the accumulated total time duration accumulated to the located cache entry equals or exceeds the decoding time. In step S603, after the cache entry is located, a sample corresponding to the decoding time can be easily found by a linear search. Here, after locating the cache entry, the method of the present invention only needs to search through the group corresponding to the cache entry for the target sample by accumulating the time durations of respective samples in the STTS entries until the sum of the accumulated time duration of samples in the located cache entry and the accumulated total time duration of cache entries prior to the located cache entry equals or exceeds the target decoding time. Therefore, total search time can be reduced. It is understood that if the sample is sought for playback, it is also determined whether the sample can be randomly accessed. As described, there are random accessible samples and non-random accessible samples among the media data. A random accessible sample means the sample can be sought and decoded without regard to other samples. If the desired sample is not a random accessible one, a random access point (random accessible sample) closest to (equal to or less than) the sample is sought from the STSS, and a decoding time of the random access point is then sought from the STTS box..

Data processing methods, or certain aspects or portions thereof, may take the form of program code (i.e., executable instructions) embodied in tangible media, such as products, floppy diskettes, CD-ROMS, hard drives, or any other machine-readable storage medium, wherein, when the program code is loaded into and executed by a machine, such as a computer, the machine thereby becomes an apparatus for practicing the methods. The methods may also be embodied in the form of program code transmitted over some transmission medium, such as electrical wiring or cabling, through fiber optics, or via any other form of transmission, wherein, when the program code is received and loaded into and executed by a machine, such as a computer, the machine becomes an apparatus for practicing the disclosed methods. When implemented on a general-purpose processor, the program code combines with the processor to provide a unique apparatus that operates analogously to application specific logic circuits.

While the invention has been described by way of example and in terms of preferred embodiment, it is to be understood that the invention is not limited thereto. Those skilled in this technology can still make various alternations and modifications without departing from the scope of this invention. Therefore, the scope of the present invention shall be defined and protected by the following claims and their equivalents.

## Claims

1. A data processing method for accessing a target sample in a media data stream, the media data stream having a plurality of samples, the method comprising:
providing at least a time to sample box (STTS) listing entries and the corresponding sample information, wherein the sample information comprises a decoding time of samples in the corresponding entry and data in the STTS box is recorded using the concept of run-duration coding to reduce the size thereof;;
providing at least a sample to chunk box (STSC) comprising chunks of the media data stream, wherein the sample information comprises the number of samples in respective chunks and data in the STSC box is recorded using the concept of run-duration coding to reduce the size thereof;;
providing target sample information corresponding to the target sample, wherein the target sample information comprises a specific decoding time, and the sample information for a predetermined number of entries is calculated and the calculated result is stored in at least one cache entry,
wherein the cache entry records the accumulated total duration of a group of sample box (STTS) listing entries or
wherein the number of cache entries with respect to each sample box (STTS) is fixed or dynamically decided according to each box size;
wherein the cache entries are partially calculated before playback and progressively during playback;
locating one of the cache entries by comparing the target sample time information with the calculated result of respective cache entries; and
after locating the cache entry, locating the target sample from the entries corresponding to the located cache entry.

2. The method of claim 1 further comprising determining the number of the cache entries according to the number of the entries.

3. The method of claim 1 further comprising calculating the sample information for the respective predetermined number of the entries during playback of the media data stream.

4. The method of claim 1 wherein further specifying the specific decoding time between an accumulated time duration recorded in the cache entries prior to the located cache entry, and an accumulated time duration recorded in the located cache entry, wherein a sum of the time duration of samples from the first cache entry to the located one equals or exceeds the specific decoding time.

5. The method of claim 1 further specifying number of the target sample between an accumulated number of samples of recorded in the cache entries prior to the located cache entry and the accumulated number of samples recorded in the located cache entry, wherein a sum of the number of samples from the first cache entry to the located one equals or exceeds the number of the target sample.

6. The method of claim 1 further providing a MPEG-4 file as the media data stream.

7. A machine-readable storage medium comprising a computer program, which, when executed, causes a device to perform a data processing method for accessing a target sample in a media data stream, the media data stream having a plurality of samples, the method comprising:
providing at least one time to sample box (STTS) listing the entries and the corresponding sample information, the sample information comprises a decoding time of samples in the corresponding entry and data in the STTS box is recorded using the concept of run-duration coding to reduce the size thereof;;
providing at least a sample to chunk box (STSC) comprising chunks of the media data stream, wherein the sample information comprises the number of samples in respective chunks and data in the STSC box is recorded using the concept of run-duration coding to reduce the size thereof;;
providing target sample information corresponding to the target sample, wherein the target sample information comprises a specific decoding time, and the sample information for a predetermined number of entries is calculated and the calculated result is stored in at least one cache entry; wherein the cache entry records the accumulated total duration of a group of sample box (STTS) listing entries or
wherein the number of cache entries with to each sample box (STTS) is fixed or dynamically decided according to each box size;
wherein the cache entries are partially calculated before playback and progressively during playback;
locating one of the cache entries by comparing the target sample time information with the calculated result of respective cache entries; and
after locating the cache entry, locating the target sample from the entries corresponding to the located cache entry.

8. The storage medium of claim 7 wherein the method further comprising determining the number of the cache entries according to the number of the entries.

9. The storage medium of claim 8 wherein the method further comprising calculating the sample information for the respective predetermined number of the entries during playback of the media data stream.

10. The storage medium of claim 8 further specifying the specific decoding time between an accumulated time duration recorded in the cache entries prior to the located cache entry, and an accumulated time duration recorded in the located cache entry, wherein a sum of the time duration of samples from the first cache entry to the located one equals or exceeds the specific decoding time.

11. The storage medium of claim 8 further specifying number of the target sample between an accumulated number of samples recorded in the cache entries prior to the located cache entry and the accumulated number of samples recorded in the located cache entry, wherein a sum of the number of samples from the first cache entry to the located one equals or exceeds the number of the target sample.

12. The storage medium of claim 8 further providing a MPEG-4 file as the media data stream.

13. A data processing system, comprising:
a media data stream comprising a plurality of samples;
at least a table storing a time to sample box (STTS) listing the entries and the corresponding sample information, the sample information comprises a decoding time of samples in the corresponding entry, and data in the STTS box is recorded using the concept of run-duration coding to reduce the size thereof;and storing a sample to chunk box (STSC), comprising chunks of the media data stream, and the sample information comprises the number of samples in respective chunks and data in the STSC box is recorded using the concept of run-duration coding to reduce the size thereof; and
at least one cache entry storing a calculated result of the sample information for a predetermined number of entries, wherein the cache entry records the accumulated total duration of a group of sample box (STTS) listing entries, wherein the number of cache entries with to each sample box (STTS) is fixed or dynamically decided according to each box size; wherein the cache entries are partially calculated before playback and progressively during playback;
a processing unit receiving target sample information corresponding to a target sample, locating one of the cache entries by comparing the target sample information with the calculated result of respective cache entries, and after locating the cache entry, locating the target sample from the entries corresponding to the located cache entry, wherein the target sample information comprises a specific decoding time.

14. The system of claim 13 wherein the processing unit further determines the number of the cache entries according to the number of the entries.

15. The system of claim 13 wherein the processing unit further calculates the sample information for the respective predetermined number of the entries during playback of the media data stream.

16. The system of claim 13 further specifying the specific decoding time is between an accumulated time duration recorded in the cache entries prior to the located cache entry, and an accumulated time duration recorded in the located cache entry, wherein a sum of the time duration of samples from the first cache entry to the located one equals or exceeds the specific decoding time.

17. The system of claim 13 further specifying number of the target sample between an accumulated number of samples recorded in the cache entries prior to the located cache entry and the accumulated number of samples recorded in the located cache entry, wherein a sum of the number of samples from the first cache entry to the located one equals or exceeds the number of the target sample.

18. The system of claim 13 further providing a MPEG-4 file as the media data stream.

19. The system of claim 13 wherein the data processing system is a MPEG-4 file decoder.

## Patentansprüche

1. Ein Datenverarbeitungsverfahren zum Zugreifen auf ein Zielmuster/Target Sample in einem Mediendatenstrom , wobei der Mediendatenstrom eine Vielzahl von Mustern hat, wobei das Verfahren umfasst:
Bereitstellen mindestens einer Zeitmusterbox /time to sample box (STTS), die die Einträge und die entsprechende Musterinformation auflistet, wobei die Musterinformationen eine Dekodierzeit von Muster in den entsprechenden Einträgen umfassen und Daten in der STTS Box werden unter Verwendung des Konzepts von Lauflängen -Kodierung aufgezeichnet, um deren Größe zu verringern;
Bereitstellen mindestens einer Muster zu Chunk Box/sample to chunk box (STSC) umfassend Chunks des Mediendatenstroms, wobei die Musterinformation die Anzahl der Muster in den jeweiligen Chunks umfassen,
und Daten in der STSC Box werden unter Verwendung des Konzepts der Lauflängen -Kodierung aufgezeichnet, um deren Größe zu verringern;
Bereitstellen von Zielmusterinformation entsprechend dem Zielmuster, wobei die Zielmusterinformationen einen bestimmten Decodierzeit umfassen, und die Musterdaten für eine vorbestimmte Anzahl von Einträgen berechnet wird, und
das berechnete Ergebnis wird in mindestens einem Cache-Eintrag gespeichert,
wobei der Cache-Eintrag die kumulierte Gesamtdauer von einer Gruppe von Muster-Box/Sample Box (STTS) Listeneinträge aufzeichnet oder
wobei die Anzahl der Cache-Einträge in Bezug auf jede Muster-Box (STTS) entsprechend jeder Box-Größe fest ist oder dynamisch festgelegt wird;
wobei die Cache-Einträge teilweise vor der Wiedergabe und schrittweise während der Wiedergabe berechnet werden;
Lokalisieren eines der Cache-Einträge durch Vergleichen der Zielmuster-Zeitinformationen mit dem berechneten Ergebnis derjeweiligen Cache-Einträge; und
Nach Auffinden des Cache-Eintrags, Lokalisierung des Zielmuster aus den Einträgen, die zu dem lokalisierten Cache-Eintrag korrespondieren.

2. Verfahren nach Anspruch 1, ferner umfassend das Bestimmen derAnzahl der Cache-Einträge nach der Anzahl der Einträge.

3. Verfahren nach Anspruch 1, weiter umfassend Berechnen der Musterinformation für die jeweilige vorbestimmte Anzahl der Einträge während der Wiedergabe des Mediendatenstroms.

4. Verfahren nach Anspruch 1, wobei die spezifische Decodierungszeit zwischen einer akkumulierten Zeitdauer, die in den Cache-Einträgen vor der dem bestimmten Cache-Eintrag akkumuliert ist, und einer akkumulierten Zeitdauer, die im bestimmten Cache-Eintrag aufgezeichnet ist, spezifiziert wird, wobei eine Summe der Zeitdauer der Muster von dem ersten Cache-Eintrags zu dem Bestimmten gleich oder größer als die spezifische Decodierzeit ist.

5. Verfahren nach Anspruch 1, weiterhin Spezifizieren der Anzahl der Zielmuster zwischen einer akkumulierten Anzahl von Muster, die in den Cacheeinträge vor dem bestimmten Cache-Eintrag aufgezeichnet wurden, und der akkumulierten Anzahl von Muster, die im bestimmten Cache-Eintrag aufgezeichnet wurden, wobei eine Summe der Anzahl von Muster aus dem ersten Cache-Eintrag zu dem Bestimmten gleich oder größer als die Anzahl der Zielmuster ist.

6. Verfahren nach Anspruch 1, weiterhin Bereitstellen einer MPEG-4-Datei als Mediendatenstrom.

7. Ein maschinenlesbares Speichermedium umfassend ein Computerprogramm, das, wenn es ausgeführt wird, bewirkt, dass eine Vorrichtung veranlasst, um ein Datenverarbeitungsverfahren zum Zugreifen auf eine Zielmuster in einem Mediendatenstroms auszuführen, der Mediendatenstrom hat eine Vielzahl von Mustern, wobei das Verfahren umfasst:
Bereitstellen mindestens einer Zeitmusterbox /time to sample box (STTS), die die Einträge und die entsprechende Musterinformation auflistet, wobei die Musterinformationen eine Dekodierzeit von Muster in den entsprechenden Einträgen umfassen und Daten in der STTS Box werden unter Verwendung des Konzepts von Lauflängen -Kodierung aufgezeichnet, um deren Größe zu verringern;
Bereitstellen mindestens einer Muster zu Chunk Box/sample to chunk box (STSC) umfassend Chunks des Mediendatenstroms, wobei die Musterinformation die Anzahl der Muster in den jeweiligen Chunks umfassen,
und Daten in der STSC Box werden mit dem Konzept der Lauflängen - Kodierung kodiert, um deren Größe zu verringern;
Bereitstellen von Zielmusterinformation entsprechend dem Zielmuster, wobei die Zielmusterinformationen einen bestimmten Decodierzeit, und die Musterdaten für eine vorbestimmte Anzahl von Einträgen berechnet wird und
das berechnete Ergebnis wird in mindestens einem Cache-Eintrag gespeichert,
wobei der Cache-Eintrag die kumulierte Gesamtdauer von einer Gruppe von Muster-Box/Sample Box (STTS) Listeneinträge aufzeichnet oder
wobei die Anzahl der Cache-Einträge in Bezug auf jede Muster-Box (STTS) entsprechend jeder Box-Größe fest sind oder dynamisch festgelegt werden;
wobei die Cache-Einträge teilweise vor der Wiedergabe und schrittweise während der Wiedergabe berechnet werden;
Lokalisieren eines der Cache-Einträge durch Vergleichen der Zielmuster Zeitinformationen mit dem berechneten Ergebnis der jeweiligen Cache-Einträge; und
Nach Auffinden des Cache-Eintrags, Lokalisierung des Zielmuster aus den Einträgen, die zu dem lokalisierten Cache-Eintrag korrespondieren.
Lokalisieren eines von dem Cache-Einträge durch Vergleich der Zielmuster Zeitinformationen mit dem berechneten Ergebnis der jeweiligen Cache-Einträgen; und Bereitstellen mindestens einer Zeitmusterbox /time to sample box (STTS), die die Einträge und die entsprechende Musterinformation auflistet, wobei die Musterinformationen eine Dekodierzeit von Muster in den entsprechenden Einträgen umfassen und Daten in der STTS Box werden unter Verwendung des Konzepts von Lauflängen -Kodierung aufgezeichnet, um deren Größe zu verringern;
Bereitstellen mindestens einer Muster zu Chunk Box/sample to chunk box (STSC) umfassend Chunks des Mediendatenstroms, wobei die Musterinformation die Anzahl der Muster in den jeweiligen Chunks umfassen,
und Daten in der STSC Box werden unter Verwendung des Konzepts der Lauflängen -Kodierung aufgezeichnet, um deren Größe zu verringern;
Bereitstellen von Zielmusterinformation entsprechend dem Zielmuster, wobei die Zielmusterinformationen einen bestimmten Decodierzeit umfassen, und die Musterdaten für eine vorbestimmte Anzahl von Einträgen berechnet wird, und
das berechnete Ergebnis wird in mindestens einem Cache-Eintrag gespeichert,
wobei der Cache-Eintrag die kumulierte Gesamtdauer von einer Gruppe von Muster-Box/Sample Box (STTS) Listeneinträge aufzeichnet oder
wobei die Anzahl der Cache-Einträge in Bezug auf jede Muster-Box (STTS) entsprechend jeder Box-Größe fest ist oder dynamisch festgelegt wird;
wobei die Cache-Einträge teilweise vor der Wiedergabe und schrittweise während der Wiedergabe berechnet werden;
Lokalisieren eines der Cache-Einträge durch Vergleichen der Zielmuster-Zeitinformationen mit dem berechneten Ergebnis der jeweiligen Cache-Einträge; und
Nach Auffinden des Cache-Eintrags, Lokalisierung des Zielmuster aus den Einträgen, die zu dem lokalisierten Cache-Eintrag korrespondieren.
Nach Auffinden der Cache-Eintrag, Lokalisierung der ZielstichMuster aus den Einträgen, die dem Cache-Eintrag befindet.

8. Das Speichermedium nach Anspruch 7, wobei das Verfahren ferner das Bestimmen der Anzahl der Cache-Einträge nach der Anzahl der Einträge umfasst.

9. Das Speichermedium nach Anspruch 8, wobei das Verfahren ferner das Berechnen der Musterinformation für die jeweilige vorbestimmte Anzahl der Einträge während der Wiedergabe des Mediendatenstroms umfasst.

10. Speichermedium nach Anspruch 8, weiterhin spezifizierend die spezifische Decodierungszeit zwischen einer akkumulierten Zeitdauer, die in den Cache-Einträgen vor der dem bestimmten Cache-Eintrag akkumuliert ist, und einer akkumulierten Zeitdauer, die im bestimmten Cache-Eintrag aufgezeichnet ist, , wobei eine Summe der Zeitdauer der Muster von dem ersten Cache-Eintrag zu dem Bestimmten gleich oder größer als die spezifische Decodierzeit ist..

11. Das Speichermedium nach Anspruch 8, weiterhin spezifizierend die Anzahl der Zielmuster zwischen einer akkumulierten Anzahl von Muster, die in den Cacheeinträge vor dem bestimmten Cache-Eintrag aufgezeichnet wurden, und der akkumulierten Anzahl von Muster, die im bestimmten Cache-Eintrag aufgezeichnet wurden, wobei eine Summe der Anzahl von Muster aus dem ersten Cache-Eintrag zu dem Bestimmten gleich oder größer als die Anzahl der Zielmuster ist.

12. Das Speichermedium nach Anspruch 8, weiterhin bereitstellend eine MPEG-4 Datei als Mediendatenstroms.

13. Datenverarbeitungssystem, umfassend:
eine Mediendatenstrom eine Mehrzahl von Muster;
mindestens eine Tabelle zum Speichern Bereitstellen mindestens einer Zeitmusterbox /time to sample box (STTS), die die Einträge und die entsprechende Musterinformation auflistet, wobei die Musterinformationen eine Dekodierzeit von Muster in den entsprechenden Einträgen umfassen und
Daten in der STTS Box werden unter Verwendung des Konzepts von Lauflängen -Kodierung aufgezeichnet, um deren Größe zu verringern;
und zum Speichern mindestens einer Muster zu Chunk Box/sample to chunk box (STSC) umfassend Chunks des Mediendatenstroms, wobei die Musterinformation die Anzahl der Muster in den jeweiligen Chunks umfassen,
und Daten in der STSC Box werden mit dem Konzept der Lauflängen - Kodierung kodiert, um deren Größe zu verringern;
wobei der Cache-Eintrag die kumulierte Gesamtdauer von einer Gruppe von Muster-Box/Sample Box (STTS) Listeneinträge aufzeichnet oder
wobei die Anzahl der Cache-Einträge in Bezug auf jede Muster-Box (STTS) entsprechend jeder Box-Größe fest sind oder dynamisch festgelegt werden;
wobei die Cache-Einträge teilweise vor der Wiedergabe und schrittweise während der Wiedergabe berechnet werden;
Lokalisieren eines der Cache-Einträge durch Vergleichen der Zielmuster Zeitinformationen mit dem berechneten Ergebnis der jeweiligen Cache-Einträge; und
Nach Auffinden des Cache-Eintrags, Lokalisierung des Zielmuster aus den Einträgen, die zu dem lokalisierten Cache-Eintrag korrespondieren.
Lokalisieren eines von dem Cache-Einträge durch Vergleich der Zielmuster Zeitinformationen mit dem berechneten Ergebnis der jeweiligen Cache-Einträgen; und Bereitstellen mindestens einer Zeitmusterbox /time to sample box (STTS), die die Einträge und die entsprechende Musterinformation auflistet, wobei die Musterinformationen eine Dekodierzeit von Muster in den entsprechenden Einträgen umfassen und Daten in der STTS Box werden unter Verwendung des Konzepts von Lauflängen -Kodierung aufgezeichnet, um deren Größe zu verringern;
Bereitstellen mindestens einer Muster zu Chunk Box/sample to chunk box (STSC) umfassend Chunks des Mediendatenstroms, wobei die Musterinformation die Anzahl der Muster in den jeweiligen Chunks umfassen,
und Daten in der STSC Box werden unter Verwendung des Konzepts der Lauflängen -Kodierung aufgezeichnet, um deren Größe zu verringern;
Bereitstellen von Zielmusterinformation entsprechend dem Zielmuster, wobei die Zielmusterinformationen einen bestimmten Decodierzeit umfassen, und die Musterdaten für eine vorbestimmte Anzahl von Einträgen berechnet wird, und
das berechnete Ergebnis wird in mindestens einem Cache-Eintrag gespeichert,
mit mindestens einem Cache Eintrag, der die kumulierte Gesamtdauer von einer vorbestimmten Menge von Muster-Box/Sample Box (STTS) speichert;
wobei der Cache Eintrag die akkumulierte Gesamdauer einer Gruppe von Muster-Box Listeneinträgen aufzeichnet,
wobei die Anzahl der Cache-Einträge in Bezug auf jede Muster-Box (STTS) entsprechend jeder Box-Größe fest ist oder dynamisch festgelegt wird;
wobei die Cache-Einträge teilweise vor der Wiedergabe und schrittweise während der Wiedergabe berechnet werden;
eine Verarbeitungseinheit, zum empfangen von Zielmusterinformationen, die zu den Zielmustern korrespondieren, Lokalisieren eines der Cache-Einträge durch Vergleichen der Zielmuster-Zeitinformationen mit dem berechneten Ergebnis der jeweiligen Cache-Einträge; und
nach Auffinden des Cache-Eintrags, Lokalisierung des Zielmuster aus den Einträgen, die zu dem lokalisierten Cache-Eintrag korrespondieren.
Nach Auffinden der Cache-Eintrag, Lokalisierung der ZielstichMuster aus den Einträgen, die dem Cache-Eintrag befindet.

14. Das System nach Anspruch 13, wobei die Verarbeitungseinheit ferner die Anzahl der Cache-Einträge nach der Anzahl der Einträge bestimmt.

15. Das System nach Anspruch 13, wobei die Verarbeitungseinheit weiterhin die Musterinformationen für die jeweilige vorbestimmte Anzahl der Einträge bei der Wiedergabe des Mediendatenstroms berechnet.

16. Das System nach Anspruch 13, weiterhin spezifizierend, dass die spezifische Decodierungszeit zwischen einer akkumulierten Zeitdauer, die in den Cache-Einträgen vor der dem bestimmten Cache-Eintrag akkumuliert ist, und einer akkumulierten Zeitdauer, die im bestimmten Cache-Eintrag aufgezeichnet ist, spezifiziert wird, wobei eine Summe der Zeitdauer der Muster von dem ersten Cache-Eintrags zu dem Bestimmten gleich oder größer als die spezifische Decodierzeit ist.

17. Das System nach Anspruch 13, weiterhin spezifizierend die Anzahl der Zielmuster zwischen einer akkumulierten Anzahl von Muster, die in den Cacheeinträge vor dem bestimmten Cache-Eintrag aufgezeichnet wurden, und der akkumulierten Anzahl von Muster, die im bestimmten Cache-Eintrag aufgezeichnet wurden, wobei eine Summe der Anzahl von Muster aus dem ersten Cache-Eintrag zu dem Bestimmten gleich oder größer als die Anzahl der Zielmuster ist.

18. Das System nach Anspruch 13, weiterhin bereitstellend eine MPEG-4 Datei als Mediendatenstroms.

19. Das System nach Anspruch 13, wobei das Datenverarbeitungssystem ein MPEG-4-Dateidekoder ist.

## Revendications

1. Un procédé de traitement de données pour accéder à un échantillon cible au sein d'un flux de données multimédia, le flux de données multimédia ayant une pluralité d'échantillons, le procédé comprenant:
la mise à disposition au moins d'une boîte temps échantillon (STTS) listant des entrées ainsi qu'une information d'échantillon correspondante, dans lequel l'information d'échantillons comporte un temps de décodage d'échantillons dans l'entrée correspondante et les données de la boîte STTS enregistrées au moyen du concept de durée d'exécution pour en réduire la dimension;
la mise à disposition au moins d'une boite échantillon fragment (STSC) comprenant des fragments du flux de données multimédia, dans lequel l'information d'échantillon comporte le nombre d'échantillons dans des fragments respectifs et les données dans la boite STSC enregistrés en utilisant le concept de durée d'exécution pour en réduire la dimension ;
la mise à disposition d'une information d'échantillon cible correspondant à l'échantillon cible, dans laquelle l'information d'échantillon cible comporte un temps de décodage spécifique, et l'information d'échantillon pour un nombre prédéterminé d'entrées est calculée et le résultat de calcul est stocké dans au moins une entrée d'antémémoire,
dans lequel l'entrée d'antémémoire enregistre la durée totale accumulée d'un groupe d'entrées de liste de boîtes d'échantillons (STTS) ou
dans lequel le nombre d'entrées d'antémémoire respectivement pour chacune des boites d'échantillons (STTS) est fixé ou déterminé de manière dynamique en fonction de la dimension de chaque boîte ;
dans lequel les entrées d'antémémoire sont calculées partiellement préalablement à la lecture et progressivement durant la lecture ;
la localisation d'une des entrées d'antémémoire par la comparaison de l'information temporelle d'échantillon cible avec le résultat de calcul des entrées d'antémémoire respective ; et
à la suite de la localisation de l'entrée d'antémémoire, la localisation de l'échantillon cible à partir des entrées correspondant à l'entrée d'antémémoire localisée.

2. Le procédé selon la revendication 1, comprenant en outre la détermination du nombre des entrées de cache en fonction du nombre d'entrées.

3. Le procédé selon la revendication 1, comprenant en outre le calcul de l'information d'échantillon pour le nombre prédéterminé respectif des entrées pendant la lecture du flux de données multimédia.

4. Le procédé selon la revendication 1, dans lequel l'on spécifie en outre le temps de décodage spécifique entre la durée accumulée enregistrées dans les entrées d'antémémoire préalablement à l'entrée d'antémémoire localisée, et une durée accumulée au sein de l'entrée de cache localisée, dans lequel la somme de la durée des échantillons depuis la première entrée d'antémémoire jusqu'à ce que l'entrée localisée est égale ou supérieure au temps de décodage spécifique.

5. Le procédé de la revendication 1 spécifiant en outre le nombre d'échantillons cible entre un nombre total d'échantillons enregistrés dans les entrées d'antémémoire préalablement à l'entrée d'antémémoire localisée et le nombre total d'échantillons enregistrés au sein de l'entrée d'antémémoire localisée, dans lequel l'addition du nombre d'échantillons depuis la première entrée d'antémémoire jusqu'à l'entrée localisée est égale ou supérieure au nombre d'échantillons cible.

6. le Procédé selon la revendication 1, dans lequel le flux de données multimédia est un fichier MPEG-4.

7. Un support de stockage lisible par machine comprenant un programme d'ordinateur qui, lorsqu'il est exécuté, amène un dispositif à exécuter un procédé de traitement de données pour accéder à un échantillon cible au sein d'un flux de données multimédias, le flux de données multimédia ayant une pluralité d'échantillons, le procédé comprenant:
la mise à disposition au moins d'une boîte temps échantillon (STTS) listant des entrées ainsi qu'une information d'échantillons correspondante, l'information d'échantillon comportant un temps de décodage d'échantillons au sein de l'entrée et les données correspondantes de la boîte STTS enregistrées au moyen du concept de durée d'exécution pour en réduire la dimension;
la mise à disposition au moins d'une boite échantillon fragment (STSC) comprenant des fragments du flux de données multimédia, dans lequel l'information d'échantillons comporte le nombre d'échantillons dans des fragments respectifs et les données dans la boite STSC enregistré en utilisant le concept de durée d'exécution pour en réduire la dimension ;
la mise à disposition d'une information d'échantillon cible correspondant à l'échantillon cible, dans laquelle l'information d'échantillon cible comporte un temps de décodage spécifique, et l'information d'échantillon pour un nombre prédéterminé d'entrées est calculée et le résultat de calcul est stocké dans au moins une entrée d'antémémoire, dans lequel l'entrée d'antémémoire enregistre la durée totale accumulée d'un groupe de boîtes d'échantillons (STTS) listant des entrées ou
dans lequel le nombre d'entrées d'antémémoire pour chacune des boites d'échantillons (STTS) est fixé ou déterminé de manière dynamique en fonction de la dimension de chaque boîte ;
dans lequel les entrées d'antémémoire sont calculées partiellement préalablement à la lecture et progressivement durant la lecture ;
la localisation d'une des entrées d'antémémoire par la comparaison de l'information temporelle d'échantillon cible avec le résultat de calcul des entrées d'antémémoire respective ; et
à la suite de la localisation de l'entrée d'antémémoire, la localisation de l'échantillon cible à partir des entrées correspondant à l'entrée d'antémémoire localisée.

8. Le support de stockage selon la revendication 7, dans lequel le procédé comprenant en outre la détermination du nombre des entrées du cache en fonction du nombre d'entrées.

9. Le support de stockage selon la revendication 8, dans lequel le procédé comprenant en outre le calcul de l'information d'échantillon pour le nombre prédéterminé respectif des entrées pendant la lecture du flux de données media.

10. Le support de stockage selon la revendication 8, spécifiant en outre le temps de décodage spécifique entre une durée totale enregistrée dans les entrées d'antémémoire avant l'entrée d'antémémoire localisée, et une durée totale enregistrée dans l'entrée d'antémémoire localisée, dans lequel l'addition de la durée d'échantillons depuis la première entrée d'antémémoire jusqu'à l'entrée localisée égale ou supérieure à un temps de décodage spécifique.

11. Le support de stockage de la revendication 8 spécifiant en outre le nombre d'échantillons cible entre un nombre total d'échantillons enregistrés dans les entrées d'antémémoire avant l'entrée d'antémémoire localisée et le nombre total d'échantillons enregistrés dans l'entrée d'antémémoire localisée, dans lequel l'addition du nombre d'échantillons depuis la première entrée d'antémémoire jusqu'à l'entrée localisée est égal ou supérieure au nombre d'échantillons cible.

12. Le support de stockage de la revendication 8 dans lequel en outre le flux de données multimédia est un fichier de MPEG-4.

13. Un système de traitement de données, comprenant:
un flux de données multimédia comprenant une pluralité d'échantillon ;
au moins une table stockant une boîte temps échantillon (STTS) listant des entrées ainsi qu'une information d'échantillon correspondante, l'information d'échantillon comportant un temps de décodage d'échantillons au sein de l'entrée et des données correspondantes de la boîte STTS enregistrées au moyen du concept de durée d'exécution pour en réduire la dimension; et
stockant une boite échantillon fragment (STSC) comprenant des fragments du flux de données multimédia, et l'information d'échantillons comprenant le nombre d'échantillons dans des fragments respectifs et les données dans la boite STSC enregistrés en utilisant le concept de durée d'exécution pour en réduire la dimension ;
au moins une entrée d'antémémoire stockant un résultat de calcul d'une information d'échantillons pour un nombre prédéterminé d'entrées, dans lequel l'entrée d'antémémoire enregistre le temps accumulé total d'un groupe d'entrées de liste de boite d'échantillons (STTS), dans lequel le nombre d'entrées d'antémémoire relativement à chaque boite d'échantillons (STTS) est fixé ou déterminé de manière dynamique en fonction de la dimension de chaque boite ;
dans lequel les entrées d'antémémoire sont partiellement calculées avant la lecture et progressivement durant la lecture ;
une unité de traitement recevant une information d'échantillon cible correspondant à un échantillon cible, localisant une des entrées d'antémémoire au moyen d'une comparaison de l'information d'échantillon cible avec le résultat de calcul des entrées d'antémémoire respectives, et à la suite de la localisation de l'entrée d'antémémoire, la localisation de l'échantillon cible depuis les entrées correspondant à l'entrée d'antémémoire localisée, dans lequel l'information d'échantillon cible comporte un temps de décodage spécifique.

14. Le système de la revendication 13 dans lequel l'unité de traitement détermine en outre le nombre d'entrées d'antémémoire en fonction du nombre d'entrées.

15. Le système de la revendication 13 dans lequel l'unité de traitement calcule en outre l'information d'échantillon pour le nombre prédéterminé respectif d'entrées durant la lecture du flux de données multimédia.

16. Le système de la revendication 13 précisant en outre que le temps de décodage spécifique est comprise entre une durée accumulée enregistrée dans les entrées d'antémémoire avant l'entrée d'antémémoire localisée, et une durée accumulée enregistrée dans l'entrée d'antémémoire localisée, dans lequel l'addition de la durée des échantillons depuis la première entrée d'antémémoire jusqu'à l'entrée localisée est égale ou dépasse un temps de décodage spécifique.

17. Le système de la revendication 16 précisant en outre que le nombre d'échantillons cible entre un nombre accumulé d'échantillons enregistrés dans les entrées d'antémémoire avant l'entrée d'antémémoire localisée et le nombre accumulé d'échantillons enregistrés dans l'entrée d'antémémoire localisée, dans lequel l'addition du nombre d'échantillons depuis la première entrée d'antémémoire jusqu'à l'entrée localisée est égale ou dépasse le nombre d'échantillons cibles.

18. Le système de la revendication 13 fournissant en outre un fichier MPEG-4 en tant que flux de données multimédia.

19. Le système de la revendication 13, dans lequel le système de traitement de données est un décodeur de fichiers MPEG-4.
